# EUROPEAN PATENT APPLICATION

(11) **EP 2 517 579 A1**
(43) Date of publication of application: **31.10.2012**
(21) Application number: 12165959.3
(22) Date of filing: 27.04.2012
(51) Int. Cl.: A23L 3/02, A23L 3/36, A23L 3/04

(54) **Novel continuous and flexible food and drink processing technology**

(30) Priority: 29.04.2011 US 201161480521 P
(71) Applicant: Newman, Paul Bernard, San Diego, CA 92028 (US)
(72) Inventor: Newman, Paul Bernard, San Diego, CA 92028 (US)
(74) Representative: Riemens, Roelof Harm

(57) **Abstract**

Novel apparatus, thermal processing medium and method for accelerated, optimized thermal processing of product, preferably foodstuffs, to a user selected processing state using a thermal processing medium that is essentially neither water nor steam, wherein said thermal processing medium does not result in nor methodology require any change of state at any point during any processing step, and wherein said thermal processing medium comprises a different composition for each of the heating, holding and cooling stages but is additionally regulatory approved for direct or indirect contact with foodstuffs, is described. It further relates to the elimination of any requirement for significant additional pressurization of either the thermal processing apparatus or the medium. It also relates to eliminating expensive, anti-corrosion additives. Finally, it relates to the flexible and modular structure of the apparatus, wherein, in conjunction with the novel methodology, the independently controlled and optimized processing of product to any user-selected processing state can, simultaneously within the same processing structures, without further modification and irrespective of product/container composition or configuration, be accomplished.

## Description

### Field of Invention

The present invention relates to a method, apparatus and thermal processing medium for the accelerated thermal processing of product to a stabilized, pasteurized or sterilized state using a thermal transfer medium that is essentially neither water nor steam, that does not result in a change of state at any point during the processing steps, and can be safely used for direct or indirect contact with foodstuffs as it is comprised of GRAS classified components. A further aspect of the invention is the elimination of the need to pressurize either the thermal processing apparatus or the medium. It further relates to the elimination of anti-corrosion additives.

It also relates to optimizing the performance of the thermal processing medium by modifying the composition of the medium to generate the optimal thermal properties for each processing step.

Finally, it relates to the modular structure of the apparatus, allowing for independent controlled and optimized processing of product to a stabilized, pasteurized or sterilized state, simultaneously within the same structure, without modification and irrespective of product/container composition or configuration.

### Background to Invention

Food and drink products are highly susceptible to microbial contamination and/or organoleptic deterioration. Methods of extending shelf-life, such as smoking and cooking have been known for thousands of years, long before the role of spoilage and pathogenic micro-organisms was known.

In more recent times, as those skilled in the art are aware there has been a massive expansion in the number and type of technologies capable of inactivating enzymes and destroying spoilage and pathogenic organisms. These include physical approaches such as microwaves, infrared, ultra violet, gamma radiation, ionized radiation, E-beam radiation, high intensity laser or non coherent light pulses, ultrasound, ohmic heating, pulsed electric fields, high voltage electric discharges, mild heat with slight pressurization, extrusion cooking, high pressure batch processing, high pressure throttling, ultra-filtration, etc.

Chemical inactivation methods are also known, including the treatment of the foodstuff with liquids such as Hydrogen Peroxide, acids, alkalis and organic acids and/or gaseous treatments such as Ozone, Carbon Dioxide, Ethylene and Propylene Oxides, etc., Similarly, biochemical methods using bacterial and other enzymes and organic substances such as herbs, spices and extracts with biostatic and biocidal properties and many technologies which utilize combinations of two or more of any of these approaches are also known.

However, despite the extensive selection of methods available, one method, that involving the heating and cooling of the foodstuff using a thermal processing medium usually air, water or steam, is by far the most prevalent whether domestic or industrial in nature. Again, this approach is also found in many different variants such as the use of dry or wet heat, continuous or batch, static or moving, aseptic or non-aseptic environments, etc.

The processing method chosen for any application is highly dependent on a wide range of factors including the amount of shelf-life required, the availability of refrigeration before and after processing, the robustness of the foodstuff raw materials or finished products, the prevalence of spoilage and/or pathogenic organisms, and the value of the raw materials and/or finished products relative to costs involved in processing and preservation.

There are four primary types of food treatment for the purpose of extending shelflife and minimizing pathogenicity, namely preservation, stabilization, pasteurization and sterilization. Each of these entails a different ratio of the amount of heating and cooling being applied with the more heating involved the less the amount of refrigeration required. Preservation, in the form of refrigeration, imparts no heating into the process and maintains many foods at their highest quality but with minimal shelf life. However, if the degree of refrigeration is increased, e.g. freezing, the shelf life increases but quality attributes tend to decrease.

Stabilization involves minimal heating (and usually rapid cooling) resulting in minimal change in food organoleptic properties. A good example is the blanching of many vegetables such as beans, corn and peas. Here minimal heat is used to inactivate enzymes within the foodstuff that are the greatest source of product deterioration. However, it does little to prevent a gradual quality deterioration due to the presence and survival of many spoilage microorganisms and nothing to reduce microbial sources of pathogenicity. Both preservation and stabilization methods and techniques are generally applied to raw materials so as to extend the time available for their conversion into more complex, added value foodstuffs.

The vast majority of semi-finished or finished food and drink products are subjected to the two most aggressive methods of food preservation, pasteurization and sterilization.

Pasteurization removes an increasing number and type of spoilage organisms from foodstuffs, the effect being proportional to the duration and severity of the treatment, usually heat treatment, applied.

It also removes many pathogenic bacteria that are in a vegetative form. It does not, however, control many spore-based sources of pathogenic microorganisms. The foodstuff therefore requires refrigeration, usually in inverse proportion to the severity of the heat treatment. Good examples of pasteurized foodstuffs are milk and fruit juices. This ensures food safety if adequately processed but eventually the surviving spoilage organisms will sour the milk and taint the fruit juice.

The most extreme food preservation treatment is sterilization. If applied under the right conditions and duration, this treatment will render the foodstuff free of all types of spoilage and pathogenic bacteria and able to be stored almost indefinitely without any refrigeration. But this usually comes at a great cost to the organoleptic quality of the foodstuff, cost of manufacturing and relative value of the processed product.

With the exception of stabilization, there are three main processes for thermal sterilization, namely Aseptic, Retorting and Continuous. Aseptic processing treats the foodstuff and the container separately before combining the two after treatment. This also necessitates that the manufacturing environment, from the point of commencement of thermal processing to the completion of product sealing, be aseptic itself. Such a process

allows maximal control over the processing of the foodstuff and will induce minimal changes to the foodstuff properties. With a few more extreme exceptions, however, it does not render the product sterile.

Retorting generally involves exposing static batches of finished and containerized foodstuffs to sufficient heat processing to render them sterile. The various stages of retorting are sequentially applied to the static foodstuff. Continuous sterilization is the converse of retorting. However neither process requires either product or package to be sterile prior to processing. The finished and containerized foodstuffs are sequentially moved through static chambers/towers, each with its own defined and controlled physical parameters. Those skilled in the art are aware that variants of the retorting process incorporate the capability for the batch product to move from one physical processing environment to another, a halfway house between batch and continuous sterilizing.

Continuous sterilization has been commercially available for almost 50 years and is the process of choice for manufacturers of large volume monoculture production, i.e. high throughput of the same products such as beans, soups and ketchup. While such systems involve major capital expenditure at the outset, over time it becomes increasingly cost effective. It allows very large volumes of product, often in excess of 400 units per minute to be continuously processed.

However, it has several limiting factors. The initial capital costs are high, the running costs, especially energy costs, are also high. The considerable system infrastructure needed to withstand the high temperatures and pressures also absorbs a large percentage of the available energy. It is relative inflexible as it requires considerable equilibration time for a product changeover. It also has little buffering capacity so product has to completely exit from one chamber/tower before system changes can be enacted. In practice, the only parameter that can be easily adjusted is speed of throughput/dwell time.

While there have been a continuous stream of incremental improvements to the established, continuous sterilization technologies (as typified by the teachings of Ono, US7008659 and Perren, USPA12/648067), more major advances to process efficiencies, product flexibility improved control and optimized product cooling have been detailed by Newman (USPA 61/488220, USPA 61/478190, USPA 61/478491 and USPA 61/478665) each of which is herein incorporated by reference.

Originally designed for metal cans, glass bottles and jars it has also been difficult to adapt the system for many more recent, alternative product containers, particularly lightweight pouches, bags and cups. Recent advances however (Newman, USPA 61/478190) teach a variety of approaches that allow new packaging materials to be processed by established continuous processing technologies.

However, unless the processing conditions are comparable, or can be made comparable through modifying throughput speed, it is difficult to adapt to process (in parallel or sequentially) for smaller batch volumes thus making it unsuitable for many manufacturers who overall may produce large total volumes but comprised of many more products in smaller batch sizes.

Retorting produces the same effects as continuous sterilizers but is more suited to smaller volumes or smaller batch sizes. Many large volume manufacturers have several to many retorts, so with proper scheduling and sequencing, they can treat similar total volumes to continuous sterilizers. Although costing significantly less per unit on a capital cost basis, the overall cost performance on a comparable volume is actually higher because of the need to change the atmospheric conditions (particularly temperature and pressure) within the retort chamber as the product goes through a holding/heating/sterilizing/cooling sequence, and having to repeat these steps for every batch processed as the retort is physically emptied and refilled.

While many attempts have been made and continue to be made to improve the energy efficiency of retorts, such as the concept of multi-chamber continuous retorts, the biggest drawback to the technology is the variability of the rate of heating and cooling within each batch. Product is usually stacked within a retort in batches. This makes it very difficult to ensure even heating and cooling of individual product containers. Slowing the temperature rise reduces some of the variability but at a performance cost.

The ability to modify processing conditions on a per batch basis makes the retort system more practical and cost effective for manufacturers with smaller throughputs. Also, as the product does not move during processing, except 'en masse', it has, until recently, been easier to process product (both individual and bulk), packaged in flexible containers within a batch retort system (Wild, USPA11/935984, Cutler, USPA10/916712).

Attempts have also been made to make retorts more flexible by introducing variants capable of product pasteurizing as well as sterilizing. Unfortunately the much slower heat up and cool down times with a retort ensures an organoleptically poorer and more variable product at higher cost than one produced through the aseptic process.

Aseptic systems are ideally suited for pasteurizing product. Because product and container are kept apart until the processing cycle is essentially finished, it is much easier to control the heating and cooling times as well as the rate of energy transfer within the foodstuff. However, such technology and methodology is most suitable for liquids with few if any particulates as dwell times tend to be very short at very elevated temperatures (up to 145°C) resulting in rapid over-processing and denaturation. And while the package receiving the product may be sterile the product rarely is (the teachings of US6096358 being typical). There are exceptions. For example US4522015 and US4547383 both teach multi-stage processes whereby solids are processed separately from liquids by flash sterilization and then the sterile solids are collated with the pasteurized liquid in a sterile container in an aseptic manufacturing environment.

Then there is the further conflict between elimination of spoilage and elimination of pathogenicity within a product. Casolari (1994) shows that while the elimination of pathogenic organisms is of the highest priority for food safety, elimination of spoilage organisms will render the product effectively sterile. (However, it should also be pointed out that biochemical reactions such as hydrolysis and oxidation will still continue even in product which has been rendered completely sterile). To achieve complete removal of spoilage organisms requires more severe processing conditions than achieving the elimination of pathogenicity.

This is the conundrum for the food manufacturer. There is an absolute requirement for the production of pathogenically-safe food. However, in doing so, the severe processing conditions cause significant deterioration in food quality attributes. The poorer the food quality attributes, the lower the value of the product.

Up to now, the specific requirements of each type of technology have made it impossible to produce aseptic, pasteurized and sterilized product within the same systems. While the technology itself imposes limitations in the type of product that can be processed, there are even greater limitations in the type of product packaging that can be processed within it as well as the flexibility in the mix of product and packaging types and sizes that it can accommodate. With the rapid advance in new and alternative packaging technologies, as well as the ever changing and expanding market of processed, convenience and ready-to-eat foods, these are major constraints.

Finally, there are the overriding limitations caused by the fundamentals of the sterilization process itself. To achieve sterilization, food has to reach and maintain temperatures of 121°C and 2 atmospheres pressure for some 5-35 minutes, depending on product, product composition, container and volume. Higher temperatures and pressures will require less exposure time. Because of very severe limitations on the type and number of chemicals that can directly or indirectly contact food, as well as cost and availability, water has been the primary 'thermal processing medium of choice'. Unfortunately water has major drawbacks as a transmitter of both heating and cooling.

Firstly it has one of the highest thermal conductivity rates of all liquids. As a consequence, it transfers its thermal energy very quickly. Traditional packaging materials such as tin cans, glass jars or bottles have thermal conductivity rates significantly higher than water so heat rapidly enters the container. Unfortunately, except when there is a high percentage of liquid in the containerized food product, most solid or semi-solid foodstuffs have heat transfer rates considerably lower than water, resulting in a very uneven thermal transfer and uneven heating of the foodstuff.

Secondly, to achieve sterilization temperatures using water as the thermal transfer medium, requires both a change of state and a change of pressure. Not only does this require a significant amount of energy, in changing from a liquid to its gaseous state, i.e. steam, its thermal conductivity also changes (from 0.58 to 0.016). With most food components (except water and ash) having a thermal conductivity in the range 0.22 - 0.38 this further exacerbates the issues related to controlled thermal transfer and resultant overprocessing and uneven processing of food and drink products.

Thirdly, it is extremely corrosive to system structures, especially anything that is constructed of metal and/or concrete with steam being more corrosive than water. It requires considerable extra cost expenditure to minimize these corrosive properties.

Finally, in order for steam to reach the required sterilization temperature, pressure needs to be applied to the steam, directly or indirectly. In continuous sterilizing systems such as the Stork Hydromatic™, the necessary pressure is generated by the height of the water in adjacent water towers. It also serves to constrain the steam within the tower. In other systems such as the retorts, the pressure is generated by the external structure of the retort. Here, as the temperature rises so would the volume but as the volume is constrained by the retort walls so the resultant pressure generated is proportional to the temperature.

We have therefore developed a totally different and novel approach to thermal food and drink processing which addresses all of the constraints, limitations and drawbacks of existing water/steam based sterilization systems using a thermal transfer medium that does not require a change of state to achieve sterilization temperatures.

We have surprisingly found that it positively affects almost ever aspect of the operation from capital and running costs, physical size and footprint while virtually eliminating the need to utilize reinforced structures and eliminating corrosion. More surprisingly, its unique design and methods of propelling product and product containers through the system, introduces significant flexibility as to range of product and container processing. Most surprisingly, we have been able to utilize the system design and properties to undertake any of the aforementioned 4 primary types of thermal processing within the same structure. Finally, the thermal medium used is fully approved for direct contact with food and food containers.

We will now summarize the principle aspects and features of the invention.

### Summary of Invention

### Definitions

In addition to the specific definitions described elsewhere within this application, for purposes of clarity, the following additional definitions are made.
'Accelerated' the reduced amount of time required for the present invention to process a foodstuff for a required processing state when compared with a conventional water/steam system processing the same volume of same product to the same required processing state. 'Approved for Food Use' relates to any component which, by regulation, legal approval, tacitly or by convention, can be used in any aspect of the manufacture, processing, storage, use, containment and/or consumption of any foodstuff.
'Different Composition' relates to the different ratio of the same primary components of the thermal processing medium used in different stages of the processing cycle. 'Essentially Continuous' differentiates the processing steps here compared with alternative systems such as batch retorting.
'Foodstuff' relates to any food or drink component or mixture or product in a raw, cooked or processed state designed for consumption by humans or animals.
'Glycerin' (synonymous with Glycerol and Glycerine) is the common name for the chemical compound, known under the IUPAC as Propane-1,2,3-Triol 'Liquid Thermal Processing Medium' relates to the status of the thermal processing medium and its physical status throughout all the stages of product processing.
'User Designated Processing State' describes the degree of processing selected by the user compared with the degree of processing actually achieved by the system.

It is an object of the present invention to produce an optimized method and apparatus for accelerated heating of foodstuffs.

It is another object of the present invention to achieve such accelerated thermal processing of foodstuffs to sterilization temperatures without a change of state of the cooling medium.

It is a further object of the invention to achieve such accelerated thermal processing using a medium that is neither water nor steam.

It is another object of the invention, that the thermal processing medium is essentially a non-ionic liquid.

It is still yet another object of the invention that the thermal processing medium maintains at all times a thermal conductivity that is similar to both foodstuff and foodstuff container.

It is yet a further object of the current invention to achieve foodstuff sterilization without the need to pressurize the system apparatus.

It is another object of the invention to achieve foodstuff sterilization without the need to pressurize the heating medium.

It is a further object of the invention to achieve such accelerated thermal processing using a medium classified as safe and approved to directly contact food product or food product containers.

It is yet a further object of the current invention to achieve foodstuff sterilization without the use of anti-corrosion additives.

It is another object of the invention to apply such thermal processing method and apparatus to any food or drink processing system so as to render the heated product stabilized, pasteurized or sterilized.

It is a further object of the invention to render the thermally processed product stabilized, pasteurized or sterilized in a continuous process.

It is yet another object of the invention that the thermal processing of foodstuffs to a state of stabilization and/or pasteurization and/or sterilization can be achieved within the same apparatus without physical modification.

It is a further object of the invention that the thermal processing of foodstuffs to a state of stabilization and/or pasteurization and/or sterilization can be achieved within the same apparatus simultaneously.

It is another object of the invention that the apparatus containing the medium thermally processing the foodstuffs to a state of stabilization and/or pasteurization and/or sterilization can handle any type of product container without physical modification.

It is yet another object of the invention that the apparatus containing the medium thermally processing the foodstuffs to a state of stabilization and/or pasteurization and/or sterilization can handle any type of product container simultaneously, without physical modification.

It is another object of the invention that the apparatus containing the medium thermally processing the foodstuffs to a state of stabilization and/or pasteurization and/or sterilization can be independently adjusted so as to handle any type of product and container combination simultaneously.

It is a further object of the invention that the medium thermally processing the foodstuffs to a state of stabilization and/or pasteurization and/or sterilization can be maintained in an essentially non-ionic and corrosion-resistant state.

It is another object of the invention that the apparatus containing the medium thermally processing the foodstuffs to a state of stabilization and/or pasteurization and/or sterilization is modular.

It is a final object of the invention that the method and apparatus thermally processing the foodstuffs to a state of stabilization and/or pasteurization and/or sterilization be capable of independently controlling and optimizing the processing capacity, throughput and product quality for each product and container combination.

### Brief Description of Drawings

Fig 1 Schematic of adjacent processing modules
Fig 2A Loading product into pre-formed 'U' shaped product carriers.
Fig 2B Engaging the locking top mesh conveyor
Fig 2C A pre-formed 'V' shaped product conveyors
Fig 2D Schematic of part of conveyor drive
Fig 2E Plan view of product carrier conveyor and drives.
Fig 3 Schematic of individual processing module construction.
Fig 4A Schematic of adjacent interlocking product carriers
Fig 4B Schematic of product carrier construction and product conveyor fixture.
Fig 4C Product container restraining mechanism in locked position.
Fig 4D Product container restraining mechanism in unlocked position.

We will now describe, in more detail, the current invention and any preferred embodiments of the present invention with reference, as necessary, to any accompanying drawings. It will be obvious to anyone skilled in the art that the current invention and its preferred embodiments can be used in many different configurations, combinations and variants. As a consequence, the description given of the invention and any preferred embodiments is merely to illustrate the potential range and scope of the current invention and not, in any way, to limit it.

We will first describe the novel thermal transfer medium used in place of water and steam to achieve the necessary product processing temperatures as well as optimized thermal transfer profiles.

Water has been the preferred thermal transfer medium for product pasteurizing and sterilizing for many centuries. The relatively low cost, abundance and safety of the medium made it the 'medium of choice' for most applications. However, it has many drawbacks including high thermal transfer rates, the necessity to change state to attain the elevated temperatures needed for sterilization, its corrosive nature and its ability to initiate oxidation and auto-oxidation reactions.

We have surprisingly found that glycerol (also known as glycerin when its composition is 90% pure glycerol or less) can, not only substitute for water and/or steam in most applications, it can do so with significantly improved physical properties and financial benefits.

Firstly, and most importantly for the development of novel food and drink processing systems, configurations and methods, unlike water, glycerol does not undergo any change of state during normal operational and processing conditions (i.e. change from a liquid to a solid at 0°C or lower nor change from a liquid to a gas at 100°C or above). It remains a liquid between -46°C and +290°C at atmospheric pressure. It also remains in a liquid state, without boiling, at 152°C under almost full vacuum. However, while its potential use as a component in anti-freeze (Wilson, US4389371) and as a refrigerant (Chen, USPA 12/135120) were recognized many decades ago, (although largely superceded by more efficient glycol mixtures as an antifreeze and halogen-based hydrocarbons as refrigerant gases), and as a thermal transfer component in commercial building heating systems (Daly, USPA 11/766992), its use as a thermal transfer medium for food and drink pasteurizing and sterilizing have not been identified until now. This lack of a state change across its entire processing temperature range has allowed us to invent a novel approach thermal processing design, technology and methodology.

Secondly, its structural stability as a molecule means that glycerol does not generate the corrosive properties of water and steam. It remains effectively non-polar across the entire thermal processing range. Consequently there is minimal to nil initiation of oxidation reactions with either the food product or the system structure. Although exposure to iron and copper salts at elevated temperatures will cause oxidation to occur and oxidation products to form.

One of the biggest practical issues faced with using water/steam as the thermal processing medium is the corrosion generated to concrete and metal components of the system structure as well as metal ion leaching that occurs from the metal cans, glass bottles and jars. While the use of expensive anti-corrosion chemicals can ameliorate these effects to some degree, ultimately, this will result in fatigue and failure of structural components. Furthermore, while most of these anti-corrosion inhibitors are approved for indirect contact with food, e.g. the food container, unlike glycerol, they are not allowed to directly contact the foodstuff itself.

We have also found that the inclusion of a chelating agent, in the preferred form of an EDTA salts mixture, (US Patent Application 61/478665) at concentrations not exceeding FDA GRAS guidelines, prevents metal cation leaching and oxidation reactions occurring when glycerol is used as a cooling medium. We have discovered that potential for cation leaching and oxidation of the thermal medium is even greater at elevated temperatures but the same EDTA salts mixture is equally as effective in minimizing or eliminating such reactions.

Thirdly, to achieve sterilization, the temperature of the thermal processing medium has to reach a minimum of 121°C and remain there for sufficient time to inactivate spore forming pathogenic micro-organisms. For spore forming spoilage organisms to be inactivated it takes even longer. For example, it is generally accepted that it takes 3-5 minutes at 121°C for pathogenic spores of C. *botulinum* to be rendered inactive. However, it takes 10+ minutes at 121°C for the spores of spoilage organism B. *stearothermophilis* to be similarly inactivated.

Because of the change of state of water to steam, conventional sterilizing equipment needs to be reinforced to withstand the increase in pressure to be encountered. For example, steam exerts a pressure of 2 atmospheres at 121°C and 3 atmospheres at 133°C.

Alternatively, a column of water 10m high exerts a pressure of 2 atmospheres and 3 atmospheres if 20m high. This latter approach explains the primary principle of Hydrostatic sterilization which utilizes a pair of towers containing water columns at least 10m high to constrain an atmosphere of steam at 121°C between them.

As glycerol has a specific density 21% -25% greater than water (dependant upon water content and temperature), a column of glycerol 7.5m high generates the same atmospheric pressure as a 10m column of water. While there is no need to pressurize a glycerol-based sterilization system, particularly when sterilizing product in polymer based pouches and bags as detailed in US Patent Application 61/478190, we have found that the natural increase in the atmospheric pressure of such a system is able to adequately function as a counter-pressure for tin cans and glass containers.

Fourthly, the greatest practical issues associated with conventional sterilization using water and steam as the thermal transfer medium is that of over-cooking, overheating and over-processing. While over-cooking results in a substantial, usually negative change in flavor and aroma profiles, over-heating causes excessive product denaturation and oxidation and over-processing results in a significant loss of textural attributes as well as poor color. Collectively, they result in a substantially lower quality product and, surprisingly, poorer keeping qualities.

Most of this is caused as a consequence of the mismatch between the thermal conductivity of the thermal transfer medium and physical properties of the foodstuffs being processed. As previously stated, in the form of water the thermal transfer rate is 2-3 times as fast as that of the major components of foodstuff (Protein, carbohydrate, fats and ash), although this rate of transfer increases relative to the water content of the component. In the form of steam, the thermal transfer rate can be up to 10 times slower. While the thermal transfer rate of steam is considerably less, this effect is primarily due to the fact that the layer of denatured product on the container surface increases in thickness as heating continues and the temperature rises and this acts as an increasing impedance to thermal transfer.

There is also a mismatch issue between the container composition and the rate of thermal transfer in conventional sterilization systems using water and steam. The thermal conductivity of glass containers (bottles and jars) is twice that of water. The thermal conductivity of steel cans is 30 times faster still.

However, we have surprisingly found that the thermal conductivity of glycerol (0.28 W/m/°C) is remarkably similar to the thermal conductivity of most common polymer-based containers (PVC, polyethylene, polypropylene, etc) such as bags, cups and pouches, in a range of 0.21 - 0.35 W/m/°C and comparable with most foodstuff components. As a consequence, it is significantly easier to control and maintain the rate of temperature rise and fall in a food product, significantly reducing over-cooking, overheating and over-processing in virtually all food products thus raising the quality and value of the resultant food products.

Fifthly, we have found that we can use all of the physical and preferred attributes of the glycerol in a novel system design which is significantly less costly to build and run compared with conventional water/steam sterilization systems particularly as there is no need to pressurize the system as there is no state change of the thermal transfer medium during any processing stage.

Sixthly, we have surprisingly found that, in order to optimize system performance, there is a need to have a different ratio of glycerol to diluent for heating/holding compared to the ratio needed for optimized cooling performance. A glycerol/water mixture of 66%:34% is optimum for cooling capacity, freezing at -47°C, such a mixture only has a boiling point of 111°C which is insufficient for sterilization requirements whereas a glycerol/water mixture of 85%:15% has a boiling point of 127.5°C, ideal for sterilization, its freezing point is only around -10°C so its cooling capacity while better than water, is much less than the optimum glycerol/water mixture for cooling. Accordingly, we incorporate such findings as embodiments to the invention.

Finally, and most importantly, we have further surprisingly found that we can incorporate all of these features into a modular system which allows the processing technology to simultaneously stabilize, pasteurize and sterilize product while accommodating product constrained within almost any type, format and size of product container.

We will now describe the novel, modular processing system and its principle features we have developed around the thermal transfer medium, glycerol. It will again be appreciated by those skilled in the art that the modularity of the current invention makes possible system configurations almost limitless. Those detailed here merely outline the potential system flexibility.

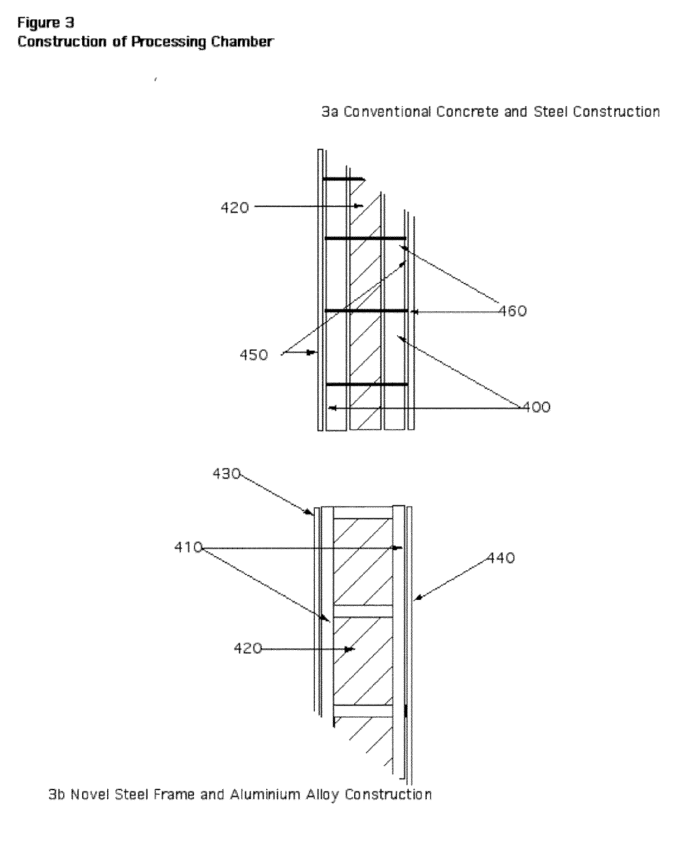

As a thermal transfer medium, glycerol has weak polarity and is non-ionic and non-corrosive. As a consequence, the form and construction of the processing chamber (Fig 3) can be virtually any material that can withstand the operational temperature range, typically -20°C to +140°C and modest pressures of 1-2 atmospheres. This includes metal, fiberglass, high temperature plastics, brick, concrete and composites. In practice, especially for food and drink applications, the inner surface or skin, which is in closest contact with the thermal transfer medium, the product container and potentially the food product itself, preferably should be of stainless steel. However, we have found that a PTFE-faced fiberglass significantly reduces the energy requirement because the material is a very poor heat conductor. (We had previously discovered that as much as 50% of the available energy was wasted through unnecessary heating of the structural and supporting components of the processing system).

The outer layer of the processing chamber needs to be poorly heat conductive so that it remains safe and cool to the touch and impervious to working conditions. The middle layer is primarily for thermal insulation but also needs to provide some rigidity to the structure to constrain the weight/mass of the thermal transfer medium.

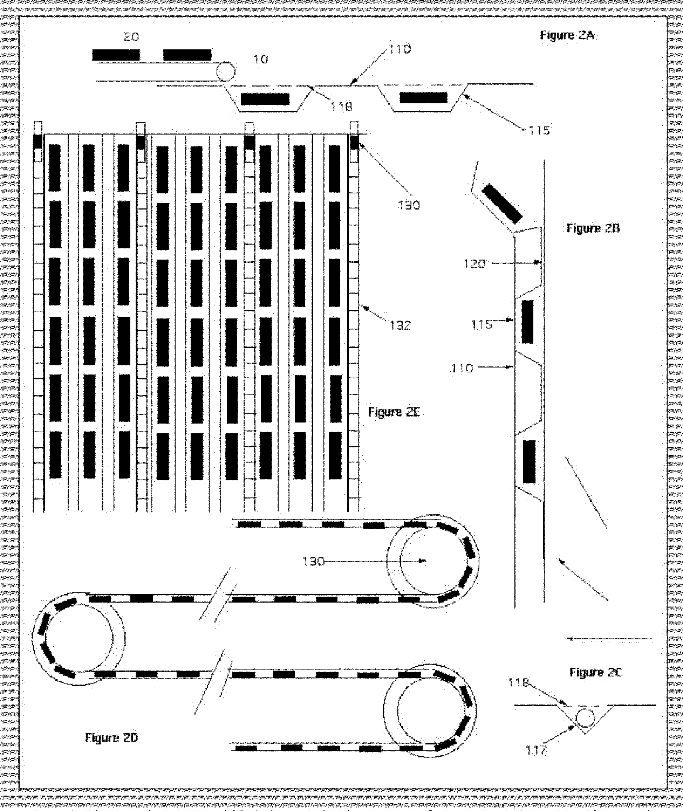

As the design of the processing chamber is modular, its width will essentially control its capacity (Fig 2E). A conventional hydrostat system is usually designed so as to handle product up to 16 cans wide (cans stacked horizontally). This equates to approximately 1.6m. However, we previously discovered (US Patent Application 61/488220) that thermal transfer within product was optimal if the containers were stacked parallel with their movement. Incorporating this feature into the processing chamber allowed the width to be reduced to 1.2m without reducing processing capacity.

We have also surprisingly found that combining the benefits of optimized product orientation and rotation, optimized packaging selection, reduced energy losses within the system structure and the improved thermal transfer properties of glycerol, the processing time (the sum of the heating, holding and cooling times) can easily be reduced by 50%-65% for most products. Consequently, incorporating some or all of these processing improvements into the processing system, the ideal width for each chamber can be further reduced to 1 m without reducing processing capacity.

Equally, height and length also play an important role in processing capacity and performance. In conventional continuous sterilizing systems, because of the need to hydrostatically constrain the steam as well as to ensure sufficient time for product to be sufficiently exposed to sterilization conditions, the height of the towers within a continuous hydrostatic sterilizer are usually between 15m and 25m. A typical throughput speed is 10cm/sec. This equates to around 8.5 minutes of dwell time per 25m tower.

By incorporating some or all of the preferred embodiments which optimize system performance and thermal transfer rates, dwell time in the sterilizing chamber can be reduced by 40-50% equating to 4.5 minutes and therefore the total distance traveled by each product container to achieve this dwell time is reduced from 50m to about 26m-29m.

While other continuous systems, such as the FMC's rotary FoodTec® system, do not need hydrostatic pressure to hold steam in place (they rely on structure reinforcement and a water/steam interface within the processing vessel), incorporating the same systemoptimizing embodiments will similarly either reduce dwell time or increase capacity.

Previously detailed embodiments have largely concentrated on optimization techniques, improved energy transfer techniques and novel energy transfer media to improve system performance and cost performance. Modifying and optimizing system design, structure and materials also play an important role in energy use optimization.

The design of the motor drives and chains holding the product containers of a conventional hydrostat have to be substantial structures because of the weight (often 4000Kg) they passively and continuously move through a vertical system with the chains and product carriers and supporting structures weighing at least a similar amount to the product being processed. This has a number of effects. Firstly, the system has to be designed to be capable of carrying and moving such a weight. This, in turn, adds further weight to the system. Secondly, it is impossible to isolate all the supporting structure from the thermal transfer medium. Consequently, a significant percentage, often close to 50%, of the available energy is used to heat the supporting structure and does little to improve the process or its energy efficiency.

It also adds significantly to overall system weight. This, in turn, requires even stronger physical system structure, chains and drives (and a larger structural footprint) to hold and move the product through the sterilization process.

We have surprisingly found that by designing the system to be top-loading and cascading the product containers through a heating or cooling chamber using a continuous serpentine conveyor, we can move the same volume of product through a structure of substantially smaller footprint, typically 10m-12m in length and 3m-4m in height in 4.5 minutes. The absolute chamber dimensions obviously depend on a combination of the product type, particularly its thermal conductivity, product composition, product container volume and processing and throughput requirements.

Additionally, as the majority of movement is horizontal and/or downward (Fig 2E), we have also been able to make use of gravity and buoyancy to further reduce both the size and the weight of the product carrier mechanism and improve its efficiency.

As detailed earlier, the conditions needed to optimize the heating phase will be quite different from those needed to optimize the holding or cooling phases of product processing. A conventional continuous hydrostatic sterilizer cannot be easily modified to accommodate different types of product, except by modifying product dwell time. Similarly, it has no or minimal buffering capacity to accommodate different product heating and cooling requirements. We have been able to effectively and efficiently incorporate the required system properties and flexibility.

Large capacity continuous sterilization systems usually can handle a limited number of product and product container types. Indeed they were originally designed to handle only metal cans and glass bottles and jars. Until recently and with very few exceptions they could not handle mixed product and/or mixed product container types - although US Patent Application 61/488220 details several novel methods of product container handling and transport that significantly increase processing flexibility.

However, such approaches do not provide sufficient product container handling flexibility for the most widely expanding food product market, that of the medium volume, multiple product manufacturer who produces total volumes approaching those of the traditional users of continuous sterilization but with a much wider product range and smaller batch runs.

It will be obvious to those skilled in the art that there are many different methods of transporting product through a sterilization or pasteurization system to achieve necessary dwell time and effective processing. However, usually such systems are optimized for a single product and product container combination and are minimally flexible for use with alternative products.

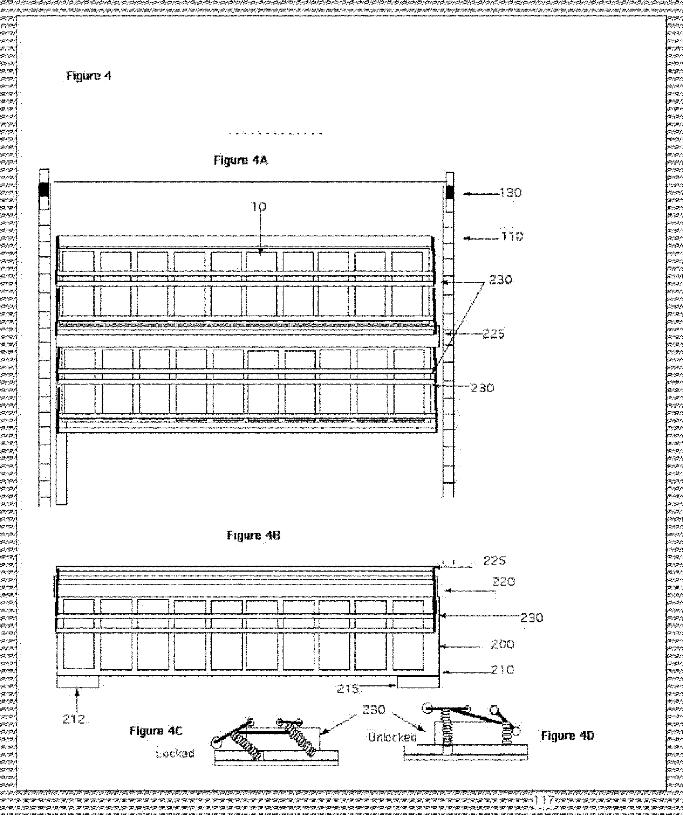

We have surprisingly found that two product handling and transporting designs can handle almost any product and product container combinations. One is a direct load system, the other is an indirect load and unload system (Fig 4).

The direct load system (Fig 2A, 2B and 2C) comprises two metal mesh conveyors running in parallel with each other at the same speed. The upper of the two conveyors (120) is a flat metal mesh. The lower (110) of the two conveyors has pre-formed cavities (115) in its bed. These cavities are easily formed by flexing the conveyor bed into the required 'V' or 'U' shapes and cross bracing them with simple metal braces (118). The length of the metal braces will determine the width of each preformed or variable cavity, the depth of the 'V' or 'U' shape will determine its volume and capacity.

While it is obvious that such a simple structure can provide almost infinite flexibility of shape, size and capacity, we have found that, in practice, only 2 or at maximum 3 product container configurations are needed to accommodate most product container types and sizes.

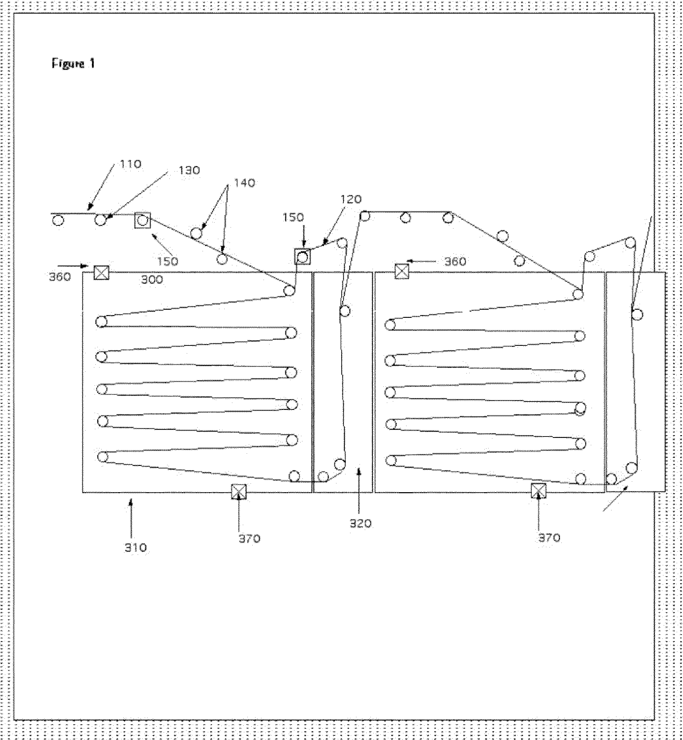

Product is simply loaded into the cavities of the lower conveyor from the top and once loaded the product moves forward where it encounters the upper conveyor. These two conveyors are now driven round a series of fixed (130) or moveable (140) cog or sprocket rollers which engage with the mesh bed of the conveyors and drive it forward and downward through the processing chamber (300, Fig 1). The positioning of the flat mesh conveyor ensures that the product is adequately and continuously constrained as it progresses through the processing chamber. Such a transportation process can be continued indefinitely through as many processing chambers as needed.

To unload product at any point in the operations, the upper mesh conveyor disengages away from the lower conveyor containing the product containers within its preformed cavities exposing the product, allowing for easy automated removal as the conveyor inverts.

The indirect loading system is a variation of the direct system. It allows for product to be pre-loaded into simple, stand-alone metal carriers using a single mesh conveyor. This is particularly useful for products that have to be processed or partially processed or manufactured elsewhere prior to sterilization or pasteurization.

Once product is collated in the product carriers (and the system is ideal for high speed automation applications), the loaded product carriers are then simply attached to a flat metal conveyor by any suitable mechanism. Because of the product volumes concerned, it is essential that any method of attachment be simple, robust and easily automated or semiautomated.
Also, as the product containers will be located on the upper and lower surface of the mesh conveyor as the conveyor moves through the processing chambers, it is essential that the product containers have points of fixture on both their proximal upper and distal lower surfaces with the conveyor.

In a preferred embodiment (Fig 4), the product carrier (200) is attached and located at its lower end (210) into shaped bars on the metal distribution conveyor by means of simple passive metal linear extensions (215), while the upper end (220) of the product carrier is locked in place, again by means of a simple passive linear extension (225) and a mechanical spring-loaded bar (230), attached to the edges of and running parallel with the mesh conveyor (110). The upper end of the next product carrier interlocks with the bottom end of the previous product carrier. Engagement of the springloaded bar firmly locks both in place (Fig 4A)

The physical location of the parallel mesh bars (235) of the metal conveyor prevent the product carrier from slipping at its lower end once located. Similarly, the spring-loaded bar prevents any slippage at its upper end. At product carrier mounting and dismounting sites (250 and 260), the movement of the conveyor engages the spring-loaded bar (normally closed) with a rotating cam (270) attached to the fixed supporting structure of the conveyor (110). Once engaged, the rotating cam causes the bar to move upward and forward exposing the designated loading site on the conveyor for the product carrier (Fig 4D). The product carrier slides into place on the upper surface of the conveyor. The lower extensions (210) of the product carrier slide into their locating holes (212) on the conveyor. Further forward movement of the conveyor and rotation of the cam causes the spring-loaded bar (230) to be gently released, locking the upper extensions (225) of the product carrier in place (Fig 4C). The position of the spring-loaded bar (230) controls the forward positioning of product containers during loading (Fig 4D). In its locked position after loading, it limits any backward movement of loaded product during processing (Fig 4C). Unloading is a reverse of the loading procedure. Although automated loading is the preferred option, semi-automated or manual may be used equally effectively, especially where delicate product or product containers are used.

The typical weight of a single product carrier (1 m wide) is around 2.5Kg and filled with 10 cans each 7.5cm wide and 10.5cm long and a gross weight of 0.5Kg equates to a 7.5Kg passive load and is easily constrained by the structure as it moved through the processing chamber.

A further major constraint with existing, conventional continuous sterilization and pasteurization processing technology is a complete lack of any buffering capacity. Not only does this result in over-processed product in the event of a processing failure, as there is no way to divert product through what is essentially a linear sequential process nor is there anywhere to divert product already within the system in the event of a processing failure. We have been able to address this problem.

As the inventive system described here is modular, it has been designed so that there is a transition area between the exit of one process module and the entrance to another. With the typical height of a processing chamber being 5m, such a structure has a buffering capacity in excess of 300 standard product cans, each10.5cm in height.

Under normal operating conditions, the temperature within the transitional areas lies somewhere between the exit temperature of the processing chamber just exited and the processing chamber about to be entered. The exact temperature is calculated and controlled by the system intelligent process controller (US Patent Application 61/478491)

However, in the event of an emergency, the temperature in the transitional chamber (320) can be rapidly raised or lowered by pumping in hot or cold thermal processing media in to the chamber. Preferentially, the thermal processing medium exits the processing chamber from the bottom and enters from the top. The throughput rate in each processing chamber can also be rapidly adjusted upward or downward so that only product in the suspect chamber needs to be so treated. The intelligent system controller will recalculate and control the required dwell time and temperature requirements for the residual product within other processing chambers on restart.

The existence of the transitional area also allows for product, both in front of and behind any affected product, to be rapidly moved out of any processing chamber and ejected from the appropriate mesh conveyor.

Unlike existing continuous sterilization systems, the true advantage of the modular chamber is the ability to minimize any potential processing issues and constrain them to a single chamber. But it does have another major advantage - significantly increased processing flexibility.

With few exceptions, existing continuous sterilizers have little processing flexibility. These systems are designed and set-up for large-volumes of specific products and product container combinations and, as such, experience relatively few product changeovers or need for significant flexibility. While batch retorting does provide the capability to thermally process smaller batches of product, it is well known that there is considerable variability in the quality and quality attributes of products processed in this way and a considerable energy inefficiency usage cost. To modify a continuous sterilizer to flexibly process multiple product types or product container types requires either major capital expenditure or a substantial loss in production/processing time as the towers are emptied and the processing conditions and/or product handling configurations are modified.

With the present invention, there are few limitations to the degree of processing flexibility that can be created. The modular system allows for easy expansion of product handling, processing flexibility and product volume, providing there is adequate heating and cooling capacity for the volume to be handled - and even this can also be easily expanded as required.

Each module is capable of individual temperature control, dwell time modification and product and product container handling. In theory, any product can be processed through any module set-up. In practice, we have found that most products can be optimally processed with just 3 or 4 process configurations. This has the additional advantage that batches of modules can be 'permanently' set up for specific product processing and specific product container handling. It also allows for product stabilization, product pasteurization and product sterilization all to take place within the same modular environment.

Finally, the configuration of any set of modules can be extended to further increase processing capacity. For example, adding an additional module for the sterilization phase potentially doubles the capacity as the temperature profile within the two modules can be set so that the product exiting from the first sterilization module can be at sterilization temperatures and thus the speed of throughput through the second module can be optimized, i.e. the dwell time is as close to the minimum needed to satisfactorily complete the sterilization phase.

Having detailed all the preferred embodiments, we can now describe a typical processing module with reference to the drawings. We will also describe how the various modules are configured into an integrated process (Fig1).

Each module (300) is comprised of 2 chambers, a larger processing chamber (310) into which product is charged and a smaller chamber (320) which serves as both a system buffer and as a location for unloading product The dimensions of each module are typically 10m-15m in length, 3m-4m in height and 1 m in width. Such a dimensioned module is capable of holding 300 batches each containing c10 rigid containers each approximately 10.5cm in length and 7.5cm in diameter or a similar number of flexible packages up to 4cm longer and 2.5cm greater in diameter when constrained within a product carrier (200).

However, if carried in the mesh belt preformed product carrier (115), (the socalled 'direct load option'), containers can be virtually of any dimension providing there is minimal container overlap and adequate spacing is maintained to ensure even rates of thermal processing. Unlike the rigid configuration of traditional continuous processing systems, because of the modular structure, capacity can easily be expanded by adding additional modules in parallel to the initial modules, without affecting existing configurations.

We have found that the structure of each module can be modified to suit the processing conditions. For example, relatively low-cost polymer based materials can be used in place of metal in modules where the internal temperature of the thermal transfer medium never exceed 60°C-70°C in temperature and more thermally stable plastics used where temperatures only reach pasteurizing temperatures (approx 100°C). In practice, we have found that constructing each module with the same configuration and composition significantly improves system performance and cost performance.

While stainless steel is an obvious choice for food applications, it is expensive, heavy to work and difficult to weld/seam. We have surprisingly found that aluminium alloy is a lighter more malleable material with better heat transfer properties. Also, with the thermal transfer medium unlikely to cause any significant ion-based oxidation, it is very suitable as a protective inner skin for all processing modules, irrespective of the thermal processing requirements.

The construction of existing continuous sterilizers involves significant reinforced foundations and metal-lined concrete-based structures, not only because of the structural footprint involved, but also because of the elevated pressures associated with the hydrostatic elements of the sterilizing processing.

As we have been able to eliminate the phase change associated with the use of water as the thermal processing medium, the atmospheric and constructional pressures are now similar in all processing modules, heating or cooling, sterilizing or pasteurizing. We have also been able to substantially reduce the weight of each processing module.

Primary module structure can still be primarily of concrete with suitable metal cladding for inner and outer surfaces (Fig 3). However, we have preferentially found that a structure consisting of a steel frame (410), insulated with high efficiency insulation (420) and clad with aluminium or aluminium alloy inner (430) and outer (440) skin provides a lower cost, lighter weight, more flexible configuration for the processing module. Its modularity also allows for easy expansion, movement or modification if required compared with the conventional concrete-based structures of continuous sterilizers.

The non-ionic nature of the thermal transfer medium allows for metal structures, such as product transfer conveyors, to be placed/immersed within the thermal medium with minimal risk of deterioration or chemical or physical failure. It also makes replacement or maintenance much easier to undertake compared with the fixed chain and drive systems of conventional sterilizers.

While all product can be transferred into, through and out of each processing module using any suitable method, the preferred embodiment to use metal conveyors (110 and 120) allows for the primary adjustable gearbox and drives (150) for each to be located on the top of or above each processing module. Unlike conventional water-based pasteurization or sterilization systems, the thermal processing medium is not corrosive and causes minimal deterioration to drive mechanics or electrics. In practice, we have found that glycerol, especially at higher temperatures, tends to form droplets in the atmosphere and it deposits itself on adjacent structures. As a consequence, we have found that treating electrical and electronic components with a suitable conformal coating such as silicone, paraxylene (or similar products) prior to installation, as a protective feature, significantly improves protection and functionality.

The primarily downward cascading construction and motion of the product carrying conveyors and the fact that all product spends 95% of its travel time submerged in the thermal transfer medium significantly reduces stress and strain forces on the product transfer and carrier mechanisms. With conventional, continuous, hydrostatic sterilization systems, the product transfer chains within the individual chambers often have to withstand strain weights exceeding 1800Kg especially in the steam/water interfaces. The cascading conveyor construction reduces this to a maximum of 450Kg or less. As a consequence, the design and construction of the product transfer structure itself is significantly less substantial and less costly in comparison. If the product is packaged in polymer-based bags, cups or pouches then the additional effects of buoyancy and increased thermal processing medium specific density reduces such stresses and strains significantly further.

In conventional continuous in-container sterilization, the sequential nature of the process required every product to pass through every process chamber/tower. The design and configuration of the system does not allow for any quick or easy modification to the process conditions or configuration, except as outlined in US Patent Application 61/488220. In comparison, the design of the cascading product conveying and transfer system allows for easy and rapid modification to both product processing and product loading or unloading at every processing module using two different but inter-related mechanisms.

The thermal transfer medium can be easily removed from every module by means of input (360) and output (370) valves located in the base and top of each processing module. This allows almost any thermal processing module to be rapidly reconfigured to be a heating, cooling or holding module.

However, an even easier approach is to by-pass any unwanted processing module. For example, product to be pasteurized does not need to pass through a processing module set-up for sterilization. Simple modification to the transfer conveyor pathway allows for unwanted or unnecessary processing modules to be by-passed.

Product loading or unloading takes place at the top of each processing module. Product to be loaded into the pre-formed carriers (115) within the conveyor (110) is simply discharged from a service supply or indexing conveyor (10) at any suitable point prior to the engaging of the flat constraining conveyor (120) which prevents the product from falling from the pre-formed carriers, with the product transfer conveyor (110). Product unloading is the reverse action.

After leaving each processing module, the constraining conveyor disengages from the product transfer conveyor, thus exposing the processed product containers within the pre-formed product carriers. Inverting these product carriers results in the discharge of the now-processed product. The discharged product can be collected by and distributed by any suitable mechanism. In practice, indexing conveyors have proven most suitable for such product handling.

For product, pre-loaded into product carriers, the carriers are loaded and unloaded on to the product transfer conveyor at the same product loading and unloading locations as previously described, by any suitable method. Of course, such carriers negate the need for the constraining conveyor which is eliminated from the processing configuration.

Typically installation configuration will be based on volume throughput requirements. For units requiring 200 or greater units per minute, one module is required for each of the heating, holding and cooling stages. Accordingly, a stabilized or pasteurized product will typically pass through a 3-module unit, while a sterilized product will require a 5-module unit. For lower volume throughput requirements, higher temperature differentials can be generated in each module and therefore, stabilization or pasteurization can be accomplished in a 2-module unit and sterilization in a 4-module configuration.

Finally, we will describe two examples of product processing. As previously mentioned, the potential permutations and variations of the equipment and process as detailed, as well as the product composition and the associated product containers, are virtually limitless. As such, the examples quoted are merely practical illustrations of the process and are, in no way, meant to be limiting.

### Example 1

The product for processing is identified by the process controller by means of process and product unique identifiers, preferentially 2D matrix identifiers, on the product container. This ensures that not only is the correct process selected but also the most current information on the product composition is provided to the process controller to optimize the process conditions for the product. The product, in this first example, is a chicken broth with solid chicken pieces (max 6mm3), in a multi-laminated polymer standup pouch. The pouch size is 12.5cm high and 8.5cm diameter. Pouch volume is 600ml. The product is to be sterilized for long-life, non-refrigerated storage. The temperature of the pouch contents on entering the processing system is 40°C.

Using an indexing conveyor, the pouches are arranged in linear file, 10 abreast with each pouch orientated so as its longitudinal axis is parallel with the forward motion of the product transfer conveyor. The pouches are loaded in batches of 10 into a pre-formed product carrier on a metal transfer conveyor. This loading occurs prior to the transfer conveyor entering the thermal transfer medium in the first processing module.

The process controller calculates the required dwell time for the product based on the thermal transfer properties of the product composition and the product container and the temperature profile of the thermal processing medium within the processing module as well as its volume and flow rate. As disclosed in US Patent Application 61/478491, the temperature gradient of the thermal processing medium is maintained at least 10°C above the required product exit temperature for each processing module.

The product passes into and through the processing module and exits at 70°C. It then enters a second module where the process conditions are optimized by the process controller so that, by the time it exits this second processing module, the product temperature within the product container is raised to 100°C.

It then enters a third processing module which ensures that the internal container temperature is raised to 121°C and maintained at that temperature for sufficient time so as to eliminate pathogenic micro-organisms as well as to meet the required shelflife without further spoilage. Because of the physical properties of the thermal processing medium, at no point during any stage of the processing cycle is there any change of state nor any need to pressurize or counter-pressurize the atmosphere or product containers of any of the processing modules.

As the product is packaged using the modified packaging as detailed in US Patent Application 61/478190, there is insufficient air/gas volume to cause any overpressurization of the product container during the heating and holding stages of the process. This ensures that maximized rapid cooling can occur without any aspect of package integrity being lost.

Following the heating and holding phases, the product is then rapidly cooled in a 2-stage process which rapidly lowers the internal temperature of the product container below that which minimizes any further thermal processing of the product and maximizes the food quality attributes of the processed product. Throughout this whole process, temperature controllers and monitors ensure sufficient thermal capacity is available for all product to meet minimum process requirements.

### Example 2

The product for processing is identified by the process controller by means of process and product unique identifiers, preferentially 2D matrix identifiers, on the product container. This ensures that not only is the correct process selected but also the most current information on the product composition is provided to the process controller to optimize the process conditions for the product. The product, in this second example, is a cream-based sauce, packed in a multi-laminated polymer stand-up pouch. The pouch size is 12.5cm high and 7.5cm diameter. Pouch volume is 400ml. The product is to be gently pasteurized for refrigerated storage. The temperature of the pouch contents on entering the processing system is 35°C.

Using an indexing conveyor, the pouches are arranged in linear file, 10 abreast with each pouch orientated so as its longitudinal axis is parallel with the motion of the product transfer conveyor. The pouches are loaded in batches of 10 into a pre-formed product carrier on a metal transfer conveyor. This loading occurs prior to the transfer conveyor entering the thermal transfer medium in the first processing module.

The process controller calculates the required dwell time for the product based on the thermal transfer properties of the product composition and the product container and the temperature profile of the thermal processing medium within the processing module as well as its volume and flow rate. As disclosed in US Patent Application 61/478665, the temperature gradient of the thermal processing medium is maintained at least 10°C above the required product exit temperature for each processing module.

The product passes into and through the processing module and exits at 65°C. It then enters a second module where the process conditions are optimized by the process controller so that, by the time it exits this second processing module, the product temperature within the product container is briefly raised (5-20 seconds) to 85°C.

As there is no further heating or holding requirement for this product, all other heating and holding modules are omitted. In addition to the low thermal requirements for the product, as the product is packaged using the modified packaging as detailed in US Patent Application 61/478190, there is insufficient air/gas volume to cause any over-pressurization of the product container during the heating and holding stages of the process. This ensures that maximized rapid cooling can occur without package integrity being lost.

Following the heating and holding phases, the product passes directly into a 2-stage cooling process which rapidly lowers the internal temperature of the product container below that which minimizes or eliminates any further thermal processing of the product and maximizes the food quality attributes of the processed product. The thermal transfer medium used in both heating and cooling cycles is glycerol. As previously discovered and detailed in US Patent Application 61/478665, during cooling, the temperature gradient of the cooling medium is always maintained at least 20°C below the required exit temperature of the processed product.

Throughout this whole process, temperature controllers and monitors ensure sufficient thermal capacity is available for all product to meet minimum process requirements while product tracking ensures that each product/product container package can be located and identified in the event of under and over-processing.

## Claims

1. An apparatus for the essentially continuous accelerated, optimized thermal processing of product, preferably foodstuffs, to a user designated processing state comprising a series of flexible and modular structures capable of simultaneously yet independently, within the said structures, controlling and optimizing product processing to any user-selected processing state without further modification and irrespective of product/container composition or configuration, wherein said processing state is achieved without any requirement for significant additional pressurization of either the thermal processing apparatus nor the medium nor product nor product container, wherein said apparatus uses a liquid thermal processing medium that is essentially neither water nor steam, wherein said thermal processing medium does not result in nor methodology require any change of state at any point to accomplish any designated processing step, and wherein said thermal processing medium comprises a different composition for each said heating, holding and cooling stages, wherein the properties of each said mixture eliminate the need for expensive, anti-corrosion additives and wherein each component of each said mixture is regulatory approved for direct or indirect contact with foodstuffs.

2. An apparatus according to claim 1 wherein any designated processed state can be sterilization, pasteurization, stabilization or enzyme inactivation.

3. An apparatus according to one of the preceding claims wherein each processing module, comprising a processing chamber and a buffering area, is essentially identical.

4. An apparatus according to one of the preceding claims wherein the processing conditions within any processing module can be independently modified wherein any designated process step can be undertaken within any processing module.

5. An apparatus according to one of the preceding claims wherein neither the apparatus nor product nor product container require the application of additional pressure or counter pressure to process product to any designated processed state.

6. An apparatus according to claim 3 and one of the other preceding claims wherein each processing module contains a product transport system capable of handling any product and product container combination without modification, and/or wherein each processing module can be independently loaded or unloaded.

7. A thermal processing medium, in particular for use in an apparatus according to one of the preceding claims, preferably not an ionic liquid and comprising only components allowed to directly or indirectly contact foodstuffs and foodstuff containers, preferably glycerol and a diluent, preferably deionized water, wherein said thermal processing medium does not change state during any step of a processing operation.

8. A thermal processing medium according to claim 7 wherein the thermal processing medium comprises a different ratio of glycerol to diluent for each of the heating, holding and cooling phases.

9. A thermal processing medium according to claim 8 wherein the composition of said medium for the heating phase contains greater than 75% pure glycerol and less than 25% deionized water, and/or wherein the composition of said medium for the cooling phase contains greater than 65% pure glycerol and less than 35% deionized water.

10. A thermal processing medium according to one of the preceding claims 7-9 wherein the thermal processing medium is permanently maintained in a non-corrosive state, and/or wherein the thermal conductivity properties of the thermal processing medium is similar to the thermal conductivity of the foodstuff being processed, and/or wherein the temperature of the thermal processing medium is maintained between -20°C and +140°C.

11. A method for the essentially continuous accelerated, optimized thermal processing of product, preferably foodstuffs, to a user designated processing state wherein a series of flexible and modular structures, capable of simultaneously yet independently, controlling and optimizing product processing to any user-selected processing state without further modification and irrespective of product/container composition or configuration, wherein said processing state is achieved without any requirement for significant additional pressurization of either the thermal processing apparatus nor the medium nor product nor product container, wherein said apparatus uses a liquid thermal processing medium that is essentially neither water nor steam, wherein said thermal processing medium does not change state at any point to accomplish any designated processing step, and wherein said thermal processing medium comprises a different composition for each said heating, holding and cooling stages and said compositions eliminate the need for expensive, anti-corrosion additives and wherein each component of each said mixture is regulatory approved for direct or indirect contact with foodstuffs.

12. A method according to claim 11 wherein the product transport system is capable of handling any product and product container combination without modification, and/or wherein each processing module can be independently loaded or unloaded.

13. A method according to one of the preceding claims 11-12 wherein neither the product nor the product container undergoing thermal processing requires the application of additional pressure or counter pressure to reach any designated processed state.

14. A method according to one of the preceding claims 11-13 wherein the thermal conductivity properties of the thermal processing medium are similar to the thermal conductivity properties of the product and the container holding the product being processed.

15. A method according to one of the preceding claims 11-14 wherein the processing conditions within any processing module can be independently modified to process any product to any user-designated processing state.
